# EUROPÄISCHE PATENTSCHRIFT

(11) **EP 2 518 381 B1**
(45) Veröffentlichungstag und Bekanntmachung des Hinweises auf die Patenterteilung: **22.10.2014**
(21) Anmeldenummer: 12159217.4
(22) Anmeldetag: 13.03.2012
(51) Int. Cl.: F16L 11/08, F16L 11/10, B29C 53/58, B29C 47/02, B29C 47/06, B29C 47/00, B29D 23/00

(54) **Flexibler Schlauch**
Flexible hose
Tuyau flexible

(30) Priorität: 26.04.2011 DE 102011018721
(43) Veröffentlichungstag der Anmeldung: 31.10.2012
(73) Patentinhaber: REHAU AG + Co, 95111 Rehau (DE)
(72) Erfinder: Goldstein, Jörg, 95028 Hof (DE); Schörner, Georg, 95111 Rehau (DE); Beyer, Klaus, 95111 Rehau (DE); Müller, Jörg, 95028 Hof (DE)

(56) Entgegenhaltungen:
- EP-A1- 1 271 034
- DE-U- 6 806 402
- GB-A- 1 449 753
- US-A- 3 825 036
- US-A- 4 410 476

## Beschreibung

Die vorliegende Erfindung betrifft einen flexiblen Schlauch gemäß dem Oberbegriff des Patentanspruchs 1.

Flexible Schläuche sind im Stand der Technik hinlänglich bekannt. Sie werden beispielsweise zum Transport von Fluiden im allgemeinen Industriebereich, im Automobilbereich, z.B. als Druckschläuche für Kraftfahrzeuge, oder aber auch für Trinkwasser sowie zum Transport von Wasser in der gewerblichen oder privaten Gartenbewirtschaftung eingesetzt.

Die Druckschrift DE 39 39 714 A1 zeigt einen Schlauch, welcher innen- oder außenseitig auf der Schlauchwandung angeordnete, schraubenlinienförmig entlang der Achse des Schlauches gewundene Profilierungen aufweist. Diese Profilierungen können sich werkstofflich von dem Werkstoff des eigentlichen Schlauchprofils unterscheiden. Die werkstoffliche Variation kann hierbei insbesondere auf der Härte bzw. der Elastizität des eingesetzten Werkstoffes beruhen, sodass durch eine derartige werkstoffliche Variation die Steifigkeit des Schlauchprofils beeinflusst werden kann. Die Herstellung des Schlauchs und der Profilierung erfolgt hierbei beispielsweise durch eine gemeinsame Extrusion und mittels einer sich drehenden Düsenscheibe des Werkzeuges.

Das Dokument DE 600 27 000 T2 zeigt ebenfalls einen flexiblen Schlauch, wobei eine Verstärkungskomponente aus einem ersten relativ steifen Kunststoffmaterial vollständig eingetaucht ist in eine aus einem zweiten Kunststoffmaterial hergestellte rohrförmige Stützwand. Hierbei besteht das zweite Kunststoffmaterial der rohrförmigen Stützwand aus demselben Kunststoffmaterial wie die Verstärkungskomponente. Die verringerte Steifigkeit des zweiten Kunststoffmaterials der rohrförmigen Stützwand wird durch den Zusatz von geeigneten Plastifizierungssubstanzen erreicht. Die Herstellung des Schlauches erfolgt hierbei ebenfalls in einem Extrusionswerkzeug, wobei die spirallinienförmige Anordnung der Verstärkungskomponente durch einen rotierenden Mitteldorn realisiert wird.

Nachteilig an dem aus dem Stand der Technik bekannten Spiralarmierungen ist, dass bei einer Druckbeaufschlagung des Schlauches mit einem Fluid dieser dazu neigt, sich in sich zu verdrehen. Eine einfache Spiralarmierung weist zudem eine relativ geringe Druckbeständigkeit auf. Problematisch bei diesem Stand der Technik ist in Folge dessen, dass die Anpassung der Armierung bzw. Verstärkungskomponente an die Bedingungen des jeweiligen Einsatzfalls nur eingeschränkt möglich ist.

Die DE 68 06 402 U zeigt einen Schlauch mit den Merkmalen des Oberbegriffs des Patentanspruchs 1. Die Verstärkungskomponenten werden hierbei durch eine gegensinnige Rotation der entsprechenden Extrusionswerkzeug-Komponenten erzeugt. Auch aus der US 4 410 476 A sowie der US 3 825 036 A sind flexible Schläuche mit an- bzw. einextrudierten Verstärkungskomponenten bekannt.

Die Erfindung stellt sich die Aufgabe, einen flexiblen Schlauch mit den eingangs beschriebenen Merkmalen anzugeben, der gegenüber dem Stand der Technik eine erhöhte Druckfestigkeit aufweist und dessen Armierung bzw. Verstärkungskomponente sich flexibel an den jeweiligen Anwendungsfall anpassen lässt.

Erfindungsgemäß wird die Aufgabe dadurch gelöst, dass die Verstärkungskomponenten mindestens ein zusätzliches, innerhalb der jeweiligen Verstärkungskomponente angeordnetes Armierungselement aufweisen.

Durch das Vorsehen einer ersten und einer zweiten Verstärkungskomponente, welche gegensinnig zueinander um den Schlauch in Richtung der Längsachse umlaufen, ergibt sich eine einfach und kostengünstig herzustellende Kreuzarmierung. Die von den Verstärkungskomponenten gebildeten Diagonallinien bilden hierbei mit der Längsachse des Schlauches den Armierungswinkel aus. Dieser Winkel lässt sich in vorteilhafterweise sehr einfach variieren, da hierzu bei der Extrusion die entsprechenden Parameter (z.B. Drehgeschwindigkeit des Dorns und/oder einer Düsenscheibe und/oder die Extrusionsgeschwindigkeit) unabhängig voneinander angepasst werden können. Es ist daher möglich die Verstärkungskomponenten des Schlauches individuell zueinander anzuordnen und auszurichten. Ein erfindungsgemäßer Schlauch kann daher äußerst flexibel an den jeweiligen Anwendungsfall angepasst werden.

Die zweite Verstärkungskomponente kann aus einem dritten Kunststoffmaterial gebildet sein, dessen Shore A-Härte ebenfalls größer als die des ersten Kunststoffmaterials ist. Die zweite Verstärkungskomponente kann ebenfalls extrudiert sein. Die zweite Verstärkungskomponente kann in einem extrudierten Streifen spirallinienförmig umlaufend in Richtung der Längsachse des Schlauches innerhalb und/oder außerhalb der Primärschicht angeordnet sein. Die zweite Verstärkungskomponente kann auch als eine Fadenarmierung ausgebildet sein.

Vorzugsweise ist neben der Primärschicht zusätzlich eine Sekundärschicht aus einem vierten Kunststoffmaterial vorgesehen. Vorzugsweise liegt die zweite Verstärkungskomponente innerhalb oder außerhalb der Sekundärschicht. Die Sekundärschicht dient insbesondere einer Verkapselung der ersten und/oder der zweiten Verstärkungskomponente, damit diese nicht im Kontakt zu dem transportierten Fluid oder der Umgebung steht. Aus Designgründen kann es jedoch von Vorteil sein, dass die äußere Schicht (Primärschicht oder Sekundärschicht) von den Verstärkungskomponenten durchdrungen ist, sodass die Verstärkungskomponente als Designmerkmal erkennbar ist. Ebenfalls möglich ist die Anordnung beider oder einer Verstärkungskomponente auf der Außenseite (Sichtseite) der Primärschicht oder der Sekundärschicht. In diesem Fall übernehmen oder übernimmt die auf der Schlauchoberfläche hervorstehenden Verstärkungskomponente/n zusätzlich eine haptische Funktion oder eine Gleitfunktion.

Das erste Kunststoffmaterial und/oder das vierte Kunststoffmaterial kann eine Shore A-Härte im Bereich von 60 bis 85 aufweisen. Die Primärschicht und/oder die Sekundärschicht bilden somit den weichen und elastischen Teil des Schlauches. Das zweite Kunststoffmaterial und/oder das dritte Kunststoffmaterial kann eine Shore A-Härte im Bereich von 90 bis 100 aufweisen. Die erste Verstärkungskomponente und die zweite Verstärkungskomponente bilden somit die Armierung des Schlauches. Durch die gegensinnige Anordnung der spirallinienförmigen Verstärkungskomponenten bzw. Armierungen wird eine sogenannte Kreuzarmierung realisiert. Generell sind die angegebenen Shore A-Härtewerte bei Prüftemperaturen mit Raumtemperatur ermittelt.

Die von den Verstärkungskomponenten gebildeten Diagonallinien können mit der Längsachse des Schlauches einen Winkel im Bereich von 30° bis 70°, vorzugsweise 40° bis 60°, weiter vorzugsweise 50° bis 55°, besonders bevorzugt von 54° einschließen. Der Winkel von 54° stellt dabei einen so genannten Neutralwinkel dar, welcher bei einer Kreuzarmierung bezüglich Längs- zu Querausdehnung bei einer Druckbeaufschlagung als besonders vorteilhaft angesehen wird.

Das Armierungselement oder die Armierungselemente kann/können gemeinsam mit der entsprechenden Extrusionsmasse des zweiten Kunststoffmaterials und/oder des dritten Kunststoffmaterials in das oder in die Schlauchformenden Extrusionswerkzeuge eingeführt werden. Das Armierungselement kann beispielsweise aus textilen (z.B aus Baumwoll- und/oder Kunstfasern) und/oder metallischen und/oder keramischen und/oder polymeren Fäden aufgebaut sein, wobei alternativ zwei unterschiedliche Materialien der vorgenannten Art miteinander kombiniert werden, also z.B. Armierungselemente aus textilen Fäden mit Armierungselementen aus keramischen Fäden oder z.B. metallische Fäden mit Armierungselementen aus polymeren Fäden. Als polymere Fadenmaterialien kommen insbesondere Polyester oder PVC in Betracht. Im Rahmen der Erfindung liegt auch die Verwendung von Mineral-, z.B. Glas-, und / oder Kohlenstoff- und / oder Aramid- und / oder Basaltfasern als Fadenmaterial, ggf. in Kombination mit einem oder mehreren der zuvor genannten Fadenmaterialien. Das Armierungselement kann aus einem verstreckten Kunststoffmaterial (z.B. aus PVC oder PET) gebildet sein. Um eine ausreichende Verbundfestigkeit zwischen den Kunststoffmaterialien der Verstärkungskomponente und dem verstreckten Kunststoffmaterial des Armierungselementes zu gewährleisten können entsprechende Haftvermittler für die gewählten Kunststoffmaterialkombinationen vorgesehen werden. Durch die Kombination unterschiedlicher Werkstoffe für die Armierungselemente und der Verstärkungskomponenten entsteht ein entsprechend hybrider Aufbau der Armierung, sodass über diese Materialwahl beispielsweise der Armierungsgrad, die Flexibilität, die Knickstabilität und auch die Herstellkosten sehr variabel gestaltet werden können. Alternativ können Armierungselement und Verstärkungskomponente aus dem gleichen Kunststoffmaterial gebildet sein, wobei die mechanischen Eigenschaften der jeweiligen Kunststoffmaterialien sich voneinander unterscheiden (z.B. durch eine physikalische oder chemische Vernetzung oder eine Verstreckung).

Die Verstärkungskomponenten können farbig ausgeführt sein. Weiter vorzugsweise können die Verstärkungskomponenten unterschiedlich farbig ausgeführt sein. Im Hinblick auf den Einsatz der Verstärkungskomponenten als zusätzliches Designelement können diese eine abweichende Farbe zu der Farbe der Primärschicht und/oder der Sekundärschicht aufweisen.

Die Primärschicht und/oder die Sekundärschicht können durchsichtig, also transluzent oder transparent, ausgeführt sein. Eine durchsichtige äußere Schlauchschicht ermöglicht die zusätzliche Nutzung der Armierungsschicht als designerisches Element des Schlauches ohne die Verstärkungskomponenten auf der Oberfläche des Schlauches anordnen zu müssen.

Ganz allgemein kann/können neben den genannten Schichten zwischen innerer und äußerer Schlauchschicht eine oder mehrere weitere Schlauchschicht/en vorgesehen sein.

Die Verstärkungskomponenten können durch Hart-PVC (Hart-Polyvinylchlorid), Polyurethan (PU), Acrylnitril-Butadien-Styrol (ABS), Polypropylen (PP), Polyethylen (PE), Polyethylenterephthalat (PET), Ethylenvinylacetat (EVA) und/oder aus einer Kombination der vorgenannten Kunststoffmaterialien gebildet sein.

Vorzugsweise umfasst das erste Kunststoffmaterial und/oder das vierte Kunststoffmaterial des erfindungsgemäßen Schlauches Polyvinylchlorid (PVC). Das heißt, die Primärschicht besteht vorzugsweise aus PVC und/oder bei Vorhandensein einer Sekundärschicht besteht diese Sekundärschicht aus einem PVC. Hierbei ist dem PVC vorzugsweise zusätzlich ein Weichmacher zugesetzt, der innerhalb der PVC-Matrix ein Migrationsniveau, gemessen nach ASTM D 3291, von einschließlich 0 bis einschließlich 2 hat. Ein geringes Migrationsniveau des Weichmachers gewährleistet, dass die Verstärkungskomponenten keine ungewünschte Veränderung der mechanischen Eigenschaften aufgrund von eindiffundierenden oder eindringenden Weichmacher aus der Primärschicht und/oder aus der Sekundärschicht erfahren. Vorzugsweise hat der Weichmacher ein Migrationsniveau innerhalb der PVC-Matrix von höchstens 1. Der Weichmacher kann gewählt sein aus der Gruppe, die Folgendes umfasst: Adipate, Benzoate, 1,2-Propandiol und/oder 1,3- und/oder 1,4-Butandiol und/oder Polypropylenglykolpolyester mit Adipinsäure, Essigsäure oder C10-C18-Fettsäuren oder n-Octanol und/oder n-Decanol, Trimellitate, Phosphate, Sebacate, Alkylsulphonate, epoxidierte Leinsamen- und Sojabohnenöle, DINCH® und/oder Citrate entweder alleine oder in Kombination. Der Weichmacher kann ferner aus einer Mischung von monomeren und polymeren Adipaten bestehen. Insbesondere ist der Weichmacher gewählt aus einer Gruppe die keine als gesundheitsbedenklich eingestuften Phthalate oder Phthalatverbindungen beinhaltet.

Der Weichmachergehalt innerhalb des ersten und/oder innerhalb des vierten Kunststoffmaterials kann 20 phr bis 100 phr (parts per hundred resin), basierend auf dem Gehalt des PVC-Materials betragen.

Das erste Kunststoffmaterial und das vierte Kunststoffmaterial können identisch sein. Das zweite Kunststoffmaterial und das dritte Kunststoffmaterial können identisch sein.

Der vorstehend beschriebene erfindungsgemäße Schlauch kann für unterschiedlichste Anwendungen eingesetzt werden. Generell ist er für verschiedenste industrielle Einsatzzwecke geeignet und ist vor allem in Kraftfahrzeugen als Druckschlauch oder aber auch für den Trinkwassertransport sowie zum Transport von Wasser in der gewerblichen oder privaten Gartenbewirtschaftung einsetzbar.

Ein Verfahren zur Herstellung eines vorstehend beschriebenen erfindungsgemäßen flexiblen Schlauches kann unter anderem die folgenden Schritte umfassen:
- Bildung einer Primärschicht, indem einem formgebenden Extrusionswerkzeug ein erstes Kunststoffmaterial in einem schmelzflüssigen bis plastischen Zustand zugeführt wird,
- Bildung einer ersten Verstärkungskomponente, indem dem formgebenden Extrusionswerkzeug ein zweites Kunststoffmaterial in einem schmelzflüssigen bis plastischen Zustand zugeführt und in einem Streifen spirallinienförmig umlaufend in Richtung der Längsachse des formenden Schlauches innerhalb und/oder außerhalb der Primärschicht angeordnet wird,
- Bildung einer zweiten Verstärkungskomponente, wobei die zweite Verstärkungskomponente schraubenlinienförmig umlaufend in Richtung der Längsachse des zu formenden Schlauches innerhalb und/oder außerhalb der Primärschicht angeordnet wird und die Umlaufrichtung der zweiten Verstärkungskomponente gegensinnig zur Umlaufrichtung der ersten Verstärkungskomponente ist,
- Abkühlen der Kunststoffmaterialen, wobei die Shore A-Härte des erstarrten zweiten Kunststoffmaterials größer ist als die es erstarrten ersten Kunststoffmaterials.

Die vorzugsweise ein- oder aufextrudierte zweite Verstärkungskomponente kann aus einem dritten Kunststoffmaterial gebildet werden. Die Shore A-Härte dieses dritten Kunststoffmaterials kann ebenfalls größer als die des ersten Kunststoffmaterials sein. Die zweite Verstärkungskomponente kann in einem Streifen spirallinienförmig umlaufend in Richtung der Längsachse des formenden Schlauches innerhalb und/oder außerhalb der Primärschicht angeordnet werden. Die Shore-A Härte bezieht sich hierbei ebenfalls auf den erstarrten Zustand der Kunststoffmaterialien.

Neben der Primärschicht kann zusätzlich eine Sekundärschicht aus einem vierten Kunststoffmaterial in einem schmelzflüssigen bis plastischen Zustand auf der Primärschicht angeordnet werden. Die zweite Verstärkungskomponente kann innerhalb oder außerhalb der Sekundärschicht liegen.

Das erste Kunststoffmaterial und das dritte Kunststoffmaterial können identisch sein. Das zweite Kunststoffmaterial und das vierte Kunststoffmaterial können ebenfalls identisch sein.

Vorzugsweise werden in dem Extrusionswerkzeug alle Kunststoffmaterialien zusammengeführt und stoffschlüssig miteinander verbunden. Ein derartiges Extrusionswerkzeug wird auch als Koextrusionswerkzeug bezeichnet. Alternativ können mehrere Extrusionswerkzeuge, welche ebenfalls Koextrusionswerkzeuge sein können, hintereinander angeordnet werden und die verschiedenen Schichten bzw. Verstärkungskomponenten formen. Eine stoffschlüssige Verbindung aller Kunststoffmaterialien erfolgt hierbei letztendlich in dem letzten in der Reihe angeordneten Extrusionswerkzeug. Die stoffschlüssige Verbindung wird zweckmäßigerweise generell durch eine entsprechende Erwärmung der Komponenten sichergestellt, beispielsweise durch die in den Schlauchschichten (Primärschicht und Sekundärschicht) unmittelbar nach oder während deren Extrusion noch vorhandene Wärme. Gegebenenfalls können haftvermittelnde Substanzen zwischen den Verstärkungskomponenten und den Schlauchschichten aufgebracht sein oder werden.

### Ausführungsbeispiele:

Im Folgenden wird die Erfindung anhand lediglich Ausführungsbeispiele darstellender Zeichnungen erläutert. Es zeigen schematisch:
- Fig. 1a, b: eine dreidimensionale Darstellung eines nicht erfindungsgemäßen flexiblen Schlauches,
- Fig. 2a,: b eine Schnittdarstellung eines nicht erfindungsgemäßen flexiblen Schlauches,
- Fig. 3-8: weitere Schnittdarstellungen nicht erfindungsgemäßer flexibler Schläuche,
- Fig. 9: eine Schnittdarstellung eines Ausführungsbeispiels eines erfindungsgemäßen Schlauchs.

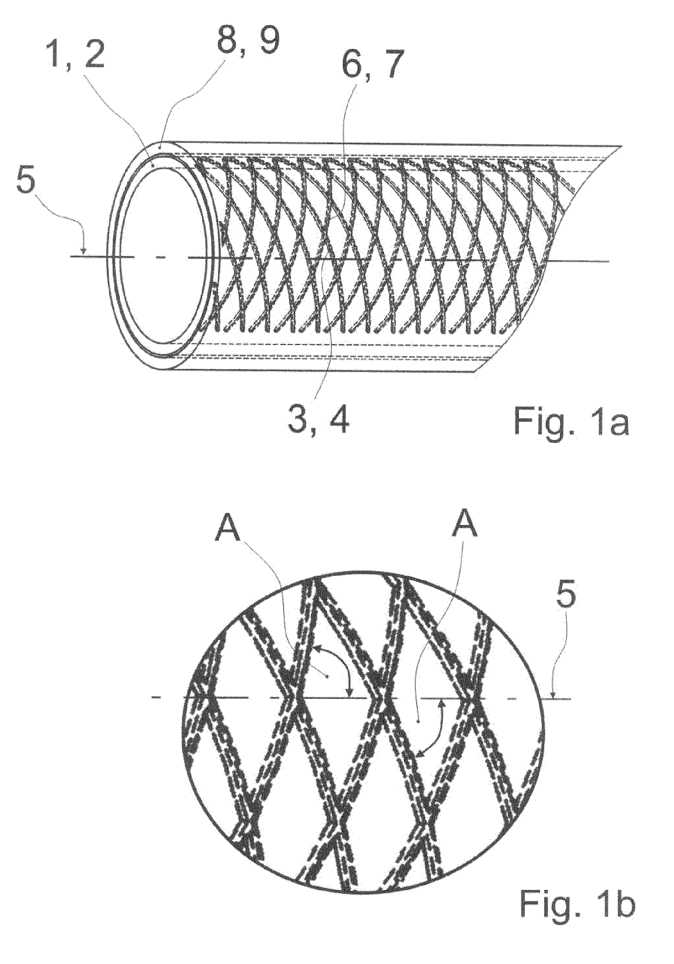

Die Figur 1 a zeigte eine dreidimensionale Darstellung eines nicht erfindungsgemäßen flexiblen Schlauches, der zur Beförderung von unter Druck stehenden Fluiden geeignet und mittels eines Extrusionsverfahrens hergestellt ist. Der flexible Schlauch umfasst eine aus einem ersten Kunststoffmaterial 1 gebildete Primärschicht 2. Eine erste Verstärkungskomponente 3 ist aus einem zweiten Kunststoffmaterial 4 gebildet, dessen Shore A-Härte größer als die des ersten Kunststoffmaterials 1 ist. Die erste Verstärkungskomponente 3 ist in einem extrudierten Streifen spirallinienförmig umlaufend in Richtung der Längsachse 5 des Schlauches innerhalb und außerhalb der Primärschicht 2 angeordnet. Eine zweite Verstärkungskomponente 6 ist spirallinienförmig umlaufend in Richtung der Längsachse 5 des Schlauches außerhalb der Primärschicht 2 angeordnet. Die Umlaufrichtung der zweiten Verstärkungskomponente 6 ist gegensinnig zur Umlaufrichtung der ersten Verstärkungskomponente 3. Die extrudierte zweite Verstärkungskomponente 6 ist aus einem dritten Kunststoffmaterial 7 gebildet, dessen Shore A-Härte ebenfalls größer als die des ersten Kunststoffmaterials 1 ist. Neben der Primärschicht 2 ist zusätzlich eine Sekundärschicht aus einem vierten Kunststoffmaterial 9 vorgesehen Die Sekundärschicht 8 ist außerhalb der Primärschicht 2 angeordnet. Die zweite Verstärkungskomponente 6 liegt innerhalb dieser Sekundärschicht 8. Das erste Kunststoffmaterial 1 und das vierte Kunststoffmaterial 9 weisen eine Shore A-Härte im Bereich von 60 bis 85 auf. Die beiden Kunststoffmaterialien 1 und 9 sind jeweils weicher als das zweite Kunststoffmaterial 4 und das dritte Kunststoffmaterial 7, welches eine Shore A-Härte im Bereich von 90 bis 100 aufweist. Die von den Verstärkungskomponenten 3, 6 gebildeten sich kreuzenden Diagonallinien schließen jeweils mit der Längsachse 5 des Schlauches einen Winkel A im Bereich von 30° bis 70° ein. In diesem Fall liegt der Winkel A bei 54°. Die Verstärkungskomponenten 3, 6 sind farbig ausgeführt. Die Primärschicht 2 und die Sekundärschicht 8 sind durchsichtig, also transparent oder zumindest transluzent ausgeführt. Ein Verfahren zur Herstellung des in Figur 1 dargestellten flexiblen Schlauches umfasst die folgenden Schritte: Bildung einer Primärschicht 2, indem einem formgebenden Extrusionswerkzeug ein erstes Kunststoffmaterial 1 in einem schmelzflüssigen bis plastischen Zustand zugeführt wird, Bildung einer ersten Verstärkungskomponente 3, indem dem formgebenden Extrusionswerkzeug ein zweites Kunststoffmaterial 4 in einem schmelzflüssigen bis plastischen Zustand zugeführt und in einem Streifen spirallinienförmig umlaufend in Richtung der Längsachse des zu formenden Schlauches innerhalb und/oder außerhalb der Primärschicht 2 angeordnet wird, Bildung einer zweiten Verstärkungskomponente 6, wobei die zweite Verstärkungskomponente 6 schraubenlinienförmig umlaufend in Richtung der Längsachse 5 des zu formenden Schlauches innerhalb und/oder außerhalb der Primärschicht 2 angeordnet wird und die Umlaufrichtung der zweiten Verstärkungskomponente 6 gegensinnig zur Umlaufrichtung der ersten Verstärkungskomponente 3 ist. Die aufextrudierte zweite Verstärkungskomponente 6 wird aus einem dritten Kunststoffmaterial 7 gebildet, dessen Shore A-Härte im erkalteten Zustand ebenfalls größer als die des ersten Kunststoffmaterials 1 ist. Die außerhalb der Primärschicht 2 angeordnete Sekundärschicht 8 wird aus einem vierten Kunststoffmaterial 9 in einem schmelzflüssigen bis plastischen Zustand angeformt. Die zweite Verstärkungskomponente 6 liegt hierbei innerhalb der Sekundärschicht 8.

Die Figur 1b zeigt einen Detailausschnitt des in Figur 1a dargestellten Schlauches. Hierbei ist verdeutlicht, wie die von den Verstärkungskomponenten 3, 6 gebildeten Diagonallinien mit der Längsachse 5 des Schlauches einen Winkel A von 54° einschließen.

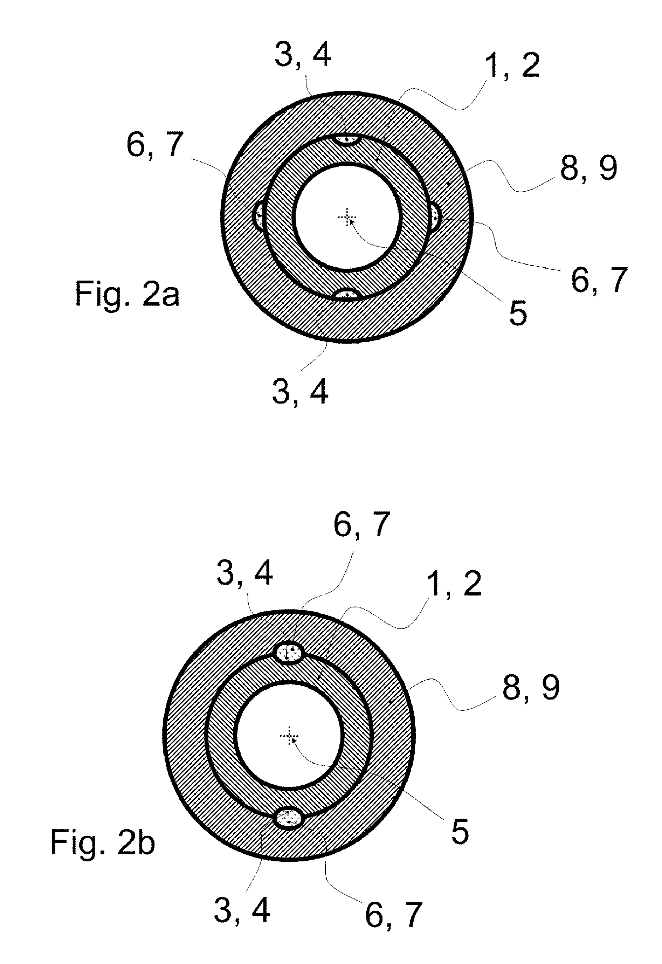

Die Figur 2a zeigt eine Schnittdarstellung durch einen weiteren nicht erfindungsgemäßen Schlauch. Zwei erste Verstärkungskomponenten 3 sind außerhalb einer Primärschicht 2 angeordnet im Bereich der Seite der Primärschichtwandung, die einer Sekundärschicht 8 zugewandt ist. Zwei zweite Verstärkungskomponenten 6 sind außerhalb der Sekundärschicht 8 angeordnet im Bereich der Seite der Sekundärschichtwandung, die der Primärschicht 2 zugewandt ist. Der in Figur 2a dargestellte Schnitt zeigt die Verstärkungskomponenten 3, 6 in ihrem maximalen Abstand zueinander. Die Figur 2b zeigt nunmehr einen in Längsrichtung des Schlauches weiter vorne, oder weiter hinten liegenden Querschnitt in welchem die Verstärkungskomponenten 3, 6 in ihrem minimalen Abstand zueinander dargestellt sind. Die Kunststoffmaterialien 4, 7 der Verstärkungskomponenten 3, 6 sind bei der Extrusion des Schlauches in einem schmelzflüssigen bis plastischen Zustand, so dass sich die Verstärkungskomponenten 3, 6 in diesem Bereich (Knotenpunkt) miteinander stoffschlüssig verbinden. Die so per Extrusion gebildeten Verstärkungskomponenten 3, 6 sind somit vorteilhafterweise untereinander verbunden und bilden eine besonders druckfeste Kreuzarmierung aus.

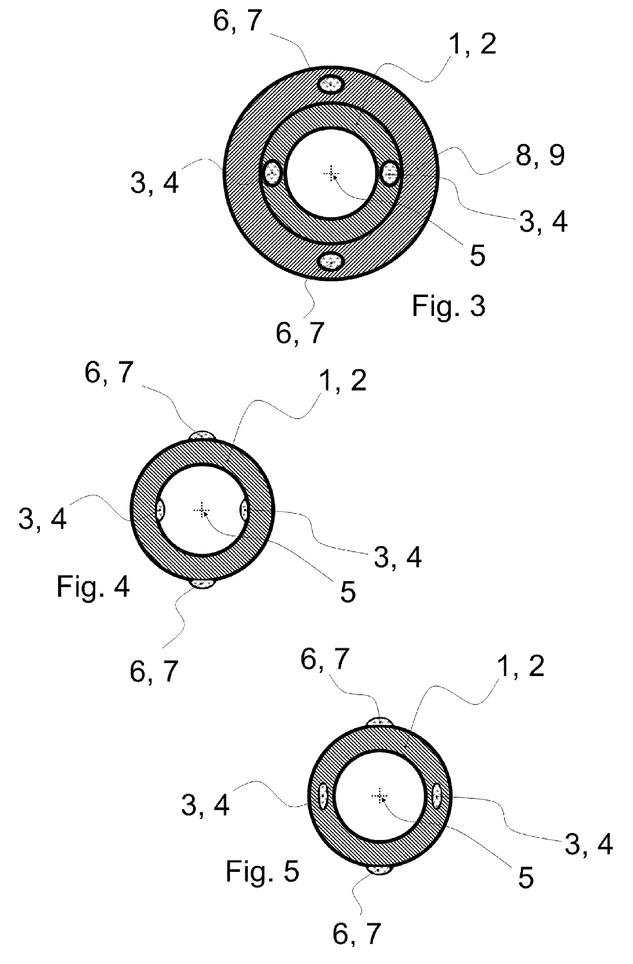

Die Figur 3 zeigt eine Schnittdarstellung durch einen weiteren nicht erfindungsgemäßen Schlauch. Zwei erste Verstärkungskomponenten 3 sind innerhalb einer Primärschicht 2 angeordnet. Zwei zweite Verstärkungskomponenten 6 sind innerhalb einer Sekundärschicht 8 angeordnet. Das erste Kunststoffmaterial 1 und das vierte Kunststoffmaterial 9 umfasst PVC (Polyvinylchlorid), wobei dem PVC zusätzlich ein Weichmacher zugesetzt ist, der innerhalb der PVC-Matrix ein Migrationsniveau, gemessen nach ASTM D 3291 von höchstens 1 hat. Hierdurch ist gewährleistet, dass die ebenfalls aus einem PVC Kunststoffmaterial gebildeten Verstärkungskomponenten 3 und 6, die jedoch einen geringeren Weichmachergehalt als die beiden Schichten 2 und 8 aufweisen, durch eine Eindiffusion oder ein Eindringen von Weichmachern aus den Schichten 2 und 8 ihre mechanischen Eigenschaften (Härte bzw. Elastizität) so verändern, dass die Armierungsfunktion der Verstärkungskomponenten 3 und 6 verringert wird. Alternativ können die Verstärkungskomponenten 3 und 6 eine Diffusionshemmende oder Diffusionsverhindernde zusätzliche Beschichtung aufweisen.

Die Figur 4 zeigt eine Schnittdarstellung durch einen weiteren nicht erfindungsgemäßen Schlauch. Zwei erste Verstärkungskomponenten 3 sind außerhalb einer Primärschicht 2 angeordnet. Die Verstärkungskomponenten 3 ragen hierbei in den Schlauchhohlraum hinein und übernehmen neben der Armierungsfunktion auch eine Gleitverbesserungsfunktion bzw. Dralleinleitungsfunktion für das zu befördernde Fluid oder Pulvermaterial. Zwei zweite Verstärkungskomponenten 6 sind außerhalb der Primärschicht 2, zur Außenseite des Schlauches hervorstehend, angeordnet und verbessern neben der Armierungsfunktion auch die Haptik des Schlauches.

Die Figur 5 zeigt eine Schnittdarstellung durch einen weiteren nicht erfindungsgemäßen Schlauch, wobei im Vergleich zu der Figur 4 hierbei die zwei ersten Verstärkungskomponenten 3 innerhalbhalb einer Primärschicht 2 angeordnet sind.

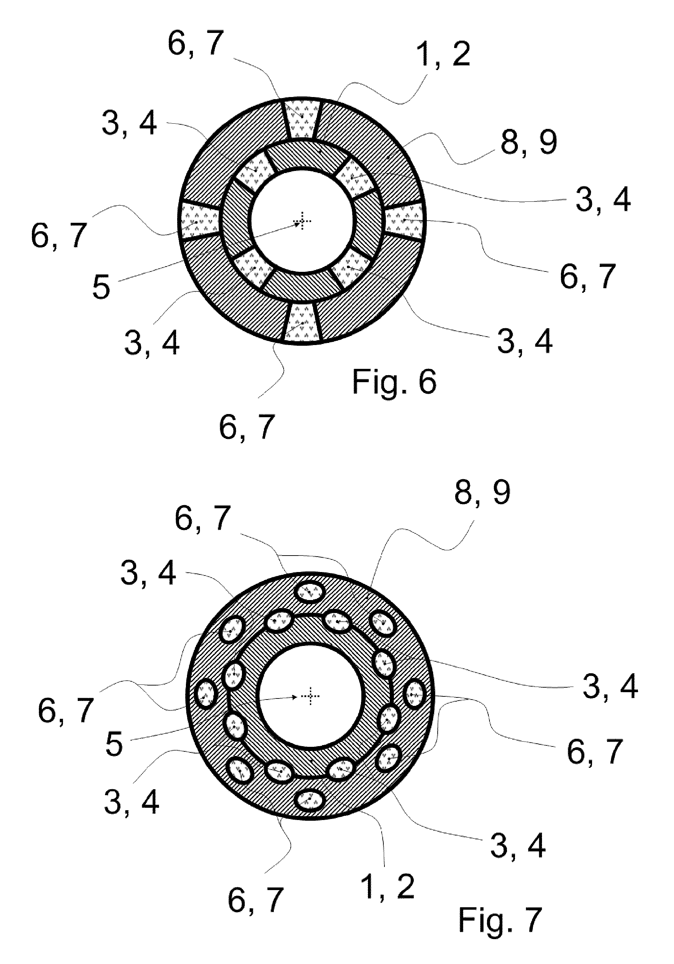

Die Figur 6 zeigt eine Schnittdarstellung durch einen weiteren nicht erfindungsgemäßen Schlauch. Im Vergleich zu den vorstehend erläuterten Figuren 2 bis 5 ist die Geometrie der Verstärkungskomponenten 3 und 6 nicht oval, elliptisch, rund oder halbmondförmig ausgebildet, sondern durch eine trapezförmige Geometrie beschreibbar. Vier erste Verstärkungskomponenten 3 sind innerhalb einer Primärschicht 2 so angeordnet, dass diese die Primärschicht 2 vollständig durchdringen und von beiden Seiten der Primärschicht 2 erkennbar sind. Vier zweite Verstärkungskomponenten 6 sind innerhalb einer Sekundärschicht 8 so angeordnet, dass diese die Sekundärschicht 8 vollständig durchdringen und von beiden Seiten der Sekundärschicht 8 erkennbar sind. Die Sekundärschicht 8 ist durchsichtig, also transparent oder transluzent ausgebildet. Aufgrund dessen, dass die Verstärkungskomponenten 3 und 6 die jeweiligen Schichten 2 und 8 durchdringen berühren sich die ersten Verstärkungskomponenten 3 und die zweiten Verstärkungskomponenten 6 aufgrund der gegensinnig umlaufenden Orientierung in den Kreuzungspunkten der durch die Verstärkungskomponenten 3 und 6 gebildeten Armierung. Im Bereich dieser Kreuzungspunkte sind die Verstärkungskomponenten 3 und 6 stoffschlüssig miteinander verbunden.

Die Figur 7 zeigt eine Schnittdarstellung durch einen weiteren nicht erfindungsgemäßen Schlauch. Acht erste Verstärkungskomponenten 3 sind außerhalb einer Primärschicht 2 so angeordnet, dass diese einer oberhalb der Primärschicht 2 angeordneten Sekundärschicht 8 zugewandt sind. Acht zweite Verstärkungskomponenten 6 sind innerhalb einer Sekundärschicht 8 angeordnet. Die Sekundärschicht 8 ist durchsichtig, also transparent oder transluzent ausgebildet, so dass sowohl die ersten Verstärkungskomponenten 3, als auch die zweiten Verstärkungskomponenten 6 von der Außenseite des Schlauches erkennbar sind. Zudem unterscheiden sich die Verstärkungskomponenten 3, 6 farblich voneinander. Die Primärschicht 2 kann ebenfalls durchsichtig sein, oder eine Kontrastfarbe zu der Farbe der Verstärkungskomponenten 3, 6 aufweisen, oder farblos also schwarz oder weiß gefärbt sein.

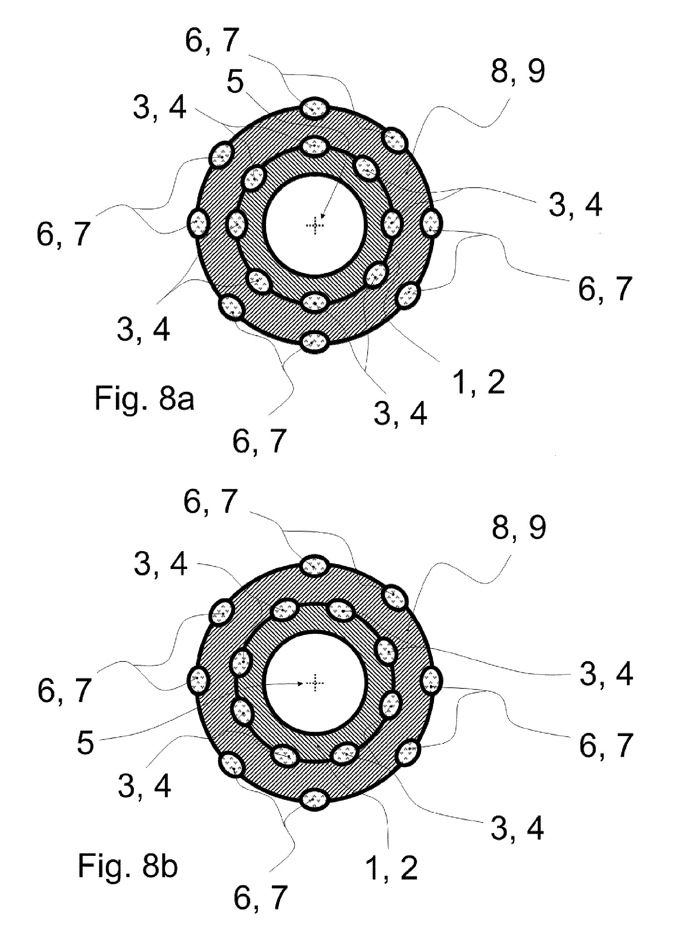

Die Figuren 8a und 8b zeigen Schnittdarstellungen durch einen weiteren nicht erfindungsgemäßen Schlauch. Acht erste Verstärkungskomponenten 3 sind außerhalb einer Primärschicht 2 so angeordnet, dass diese einer oberhalb der Primärschicht 2 angeordneten Sekundärschicht 8 zugewandt sind. Acht zweite Verstärkungskomponenten 6 sind außerhalb der Primärschicht 2 und außerhalb der Sekundärschicht 8 angeordnet. Die Figur 2b zeigt nunmehr einen in Längsrichtung des Schlauches weiter vorne, oder weiter hinten liegenden Querschnitt in welchem die Verstärkungskomponenten 3, 6 in ihrem maximalen Abstand zueinander dargestellt sind.

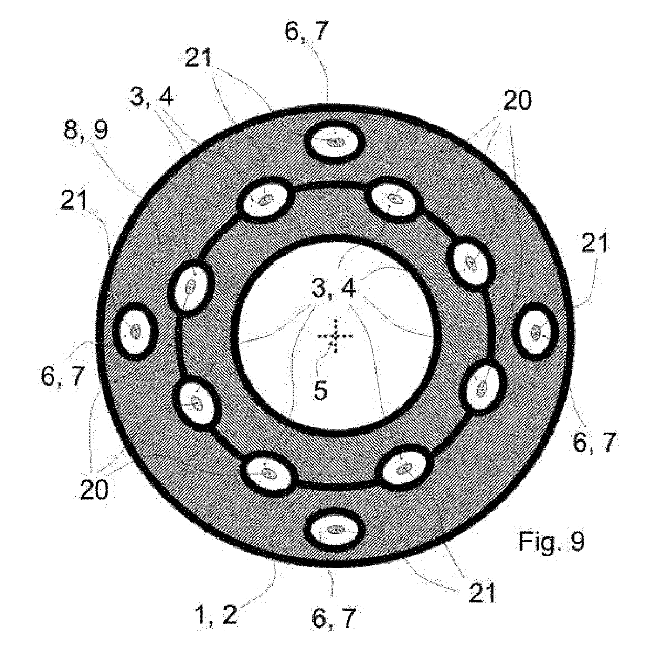

Die Figur 9 zeigt eine Schnittdarstellung durch ein Ausführungsbeispiel eines erfindungsgemäßen Schlauches. Acht erste Verstärkungskomponenten 3 sind außerhalb einer Primärschicht 2 so angeordnet, dass diese einer oberhalb der Primärschicht 2 angeordneten Sekundärschicht 8 zugewandt sind. Vier zweite Verstärkungskomponenten 6 sind innerhalb einer Sekundärschicht 8 angeordnet. Die Sekundärschicht 8 ist durchsichtig, also transparent oder transluzent ausgebildet, so dass sowohl die ersten Verstärkungskomponenten 3, als auch die zweiten Verstärkungskomponenten 6 von der Außenseite des Schlauches erkennbar sind. Die extrudierten Verstärkungskomponenten 3 und 6 weisen ergänzend weitere Armierungselemente 20 und 21 auf. Die Armierungselemente 20, 21 sind gemeinsam mit der entsprechenden Extrusionsmasse des zweiten Kunststoffmaterials 4 und des dritten Kunststoffmaterials 7 in das oder in die Schlauchformenden Extrusionswerkzeuge eingeführt worden. Die Armierungselemente 20 und 21 sind innerhalb der Verstärkungskomponente 3 und 6 angeordnet. Die Armierungselemente 21 sind aus textilen (z.B aus Baumwoll- und/oder Kunstfasern) und/oder metallischen und/oder keramischen und/oder polymeren Fäden aufgebaut. Als polymere Fadenmaterialien kommen insbesondere Polyester oder PVC in Betracht. Im Rahmen der Erfindung liegt auch die Verwendung von Mineral-, z.B. Glas-, und / oder Kohlenstoff- und / oder Aramid- und / oder Basaltfasern als Fadenmaterial, ggf. in Kombination mit einem oder mehreren der zuvor genannten Fadenmaterialien. Die Armierungselemente 21 sind sowohl in der ersten Verstärkungskomponente 3, als auch in der zweiten Verstärkungskomponente 6 angeordnet. Die Armierungselemente 20 sind aus einem verstreckten Kunststoffmaterial (PVC oder PET) gebildet und befinden sich nur in der ersten Verstärkungskomponente 3. Um eine ausreichende Verbundfestigkeit zwischen den Kunststoffmaterialien 4 der Verstärkungskomponente 3 und dem verstreckten Kunststoffmaterial der Armierungselemente 20 zu gewährleisten sind entsprechende Haftvermittler für die gewählten Kunststoffmaterialkombinationen vorgesehen. Durch die ergänzenden Armierungselemente 20, 21 lässt sich die Druckfestigkeit des flexiblen Schlauches bzw. dessen Verstärkungskomponente sehr flexibel an den jeweiligen Anwendungsfall anpassen und in einem weiten Bereich variieren.

## Patentansprüche

1. Flexibler Schlauch, der zur Beförderung von unter Druck stehenden Fluiden geeignet und mittels eines Extrusionsverfahren hergestellt ist, umfassend:
- eine aus einem ersten Kunststoffmaterial (1) gebildete Primärschicht (2),
- mindestens eine erste extrudierte Verstärkungskomponente (3) gebildet aus einem zweiten Kunststoffmaterial (4), dessen Shore A Härte größer als die des ersten Kunststoffmaterials (1) ist,
wobei die erste Verstärkungskomponente (3) in einem extrudierten Streifen spirallinienförmig umlaufend in Richtung der Längsachse (5) des Schlauches innerhalb und/oder außerhalb der Primärschicht (2) angeordnet ist, und
wobei mindestens eine zweite extrudierte Verstärkungskomponente (6) spirallinienförmig umlaufend in Richtung der Längsachse (5) des Schlauches innerhalb und/oder außerhalb der Primärschicht (2) angeordnet und die Umlaufrichtung der zweiten Verstärkungskomponente (6) gegensinnig zur Umlaufrichtung der ersten Verstärkungskomponente (3) ist,
**dadurch gekennzeichnet, dass** die Verstärkungskomponenten (3, 6) mindestens ein zusätzliches, innerhalb der jeweiligen Verstärkungskomponente (3, 6) angeordnetes Armierungselement (20, 21) aufweisen.

2. Schlauch nach Anspruch 1, **dadurch gekennzeichnet, dass** die zweite Verstärkungskomponente (6) aus einem dritten Kunststoffmaterial (7) gebildet ist, dessen Shore A Härte ebenfalls größer als die des ersten Kunststoffmaterials (1) ist.

3. Schlauch nach einem der vorstehenden Ansprüche 1 oder 2, **dadurch gekennzeichnet, dass** neben der Primärschicht (2) zusätzlich eine Sekundärschicht (8) aus einem vierten Kunststoffmaterial (9) vorgesehen ist, und die zweite Verstärkungskomponente (6) innerhalb oder außerhalb der Sekundärschicht (8) liegt.

4. Schlauch nach einem der vorstehenden Ansprüche, **dadurch gekennzeichnet, dass** das erste Kunststoffmaterial (1) und/oder das vierte Kunststoffmaterial (9) eine Shore A Härte im Bereich von 60 bis 85 aufweist oder aufweisen und, dass das zweite Kunststoffmaterial (4) und/oder das dritte Kunststoffmaterial (7) einen Shore A Härte im Bereich von 90 bis 100 aufweist oder aufweisen.

5. Schlauch nach einem der vorstehenden Ansprüche, **dadurch gekennzeichnet, dass** die von den Verstärkungskomponenten (3, 6) gebildeten Diagonallinien mit der Längsachse (5) des Schlauches einen Winkel (A) im Bereich von 30° bis 70°, vorzugsweise 40° bis 60°, weiter vorzugsweise 50° bis 55°, bevorzugt von 54° einschließen.

6. Schlauch nach einem der vorstehenden Ansprüche, **dadurch gekennzeichnet, dass** die Primärschicht (2) und/oder die Sekundärschicht (8) durchsichtig, also transluzent oder transparent, ausgeführt sind.

7. Schlauch nach einem der vorstehenden Ansprüche, **dadurch gekennzeichnet, dass** das erste Kunststoffmaterial (1) und/oder das vierte Kunststoffmaterial (9) PVC umfasst, wobei dem PVC zusätzlich ein Weichmacher zugesetzt ist, der innerhalb der PVC-Matrix ein Migrationsniveau, gemessen nach ASTM D 3291, von einschließlich 0 bis einschließlich 2, vorzugsweise von höchstens 1 hat.

## Claims

1. Flexible hose, which is suitable for transporting fluids under pressure and is produced by means of an extrusion process, comprising:
- a primary layer (2) formed from a first plastics material (1),
- at least one first extruded reinforcing component (3) formed from a second plastics material (4), the Shore A hardness of which is greater than that of the first plastics material (1),
wherein the first reinforcing component (3) is arranged in an extruded strip running spirally around in the direction of the longitudinal axis (5) of the hose inside and/or outside the primary layer (2), and
wherein at least one second extruded reinforcing component (6) is arranged running spirally around in the direction of the longitudinal axis (5) of the hose inside and/or outside the primary layer (2) and the direction in which the second reinforcing component (6) runs around is opposite to the direction in which the first reinforcing component (3) runs around,
**characterized in that** the reinforcing components (3, 6) have at least one additional armouring element (20, 21), arranged within the respective reinforcing component (3, 6).

2. Hose according to Claim 1, **characterized in that** the second reinforcing component (6) is formed from a third plastics material (7), the Shore A hardness of which is likewise greater than that of the first plastics material (1).

3. Hose according to either of the preceding Claims 1 and 2, **characterized in that**, apart from the primary layer (2), a secondary layer (8) of a fourth plastics material (9) is additionally provided, and the second reinforcing component (6) lies inside or outside the secondary layer (8).

4. Hose according to one of the preceding claims, **characterized in that** the first plastics material (1) and/or the fourth plastics material (9) has or have a Shore A hardness in the range from 60 to 85 and **in that** the second plastics material (4) and/or the third plastics material (7) has or have a Shore A hardness in the range from 90 to 100.

5. Hose according to one of the preceding claims, **characterized in that** the diagonal lines formed by the reinforcing components (3, 6) form with the longitudinal axis (5) of the hose an angle (A) in the range from 30° to 70°, preferably 40° to 60°, more preferably 50° to 55°, with preference of 54°.

6. Hose according to one of the preceding claims, **characterized in that** the primary layer (2) and/or the secondary layer (8) is made such that it can be seen through, that is to say translucent or transparent.

7. Hose according to one of the preceding claims, **characterized in that** the first plastics material (1) and/or the fourth plastics material (9) comprises PVC, there additionally being added to the PVC a plasticizer that has within the PVC matrix a migration level, measured in accordance with ASTM D 3291, of from and including 0 up to and including 2, preferably of at most 1.

## Revendications

1. Tuyau souple, qui convient pour le transport de fluides sous pression et qui est fabriqué à l'aide d'un procédé d'extrusion, comprenant
- une couche primaire (2) formée à partir d'un premier matériau synthétique (1),
- au moins un premier composant de renforcement extrudé (3) formé à partir d'un deuxième matériau synthétique (4) dont la dureté Shore A est supérieure à celle du premier matériau synthétique (1),
le premier composant de renforcement (3) étant disposé sous forme d'une bande extrudée, en spirale, de manière périphérique dans le sens de l'axe longitudinal (5) du tuyau, à l'intérieur et/ou à l'extérieur de la couche primaire (2), et
au moins un deuxième composant de renforcement (6) extrudé étant disposé en spirale, de manière périphérique dans le sens de l'axe longitudinal (5) du tuyau, à l'intérieur et/ou à l'extérieur de la couche primaire (2), et le sens périphérique du deuxième composant de renforcement (6) étant opposé au sens périphérique du premier composant de renforcement (3), **caractérisé en ce que** les composants de renforcement (3, 6) présentent au moins un élément d'armature (20, 21) supplémentaire, disposé à l'intérieur de chaque composant de renforcement (3, 6).

2. Tuyau selon la revendication 1, **caractérisé en ce que** le deuxième composant de renforcement (6) est formé à partir d'un troisième matériau synthétique (7) dont la dureté Shore A est également supérieure à celle du premier matériau synthétique (1).

3. Tuyau selon l'une quelconque des revendications précédentes 1 ou 2, **caractérisé en ce qu'**une couche secondaire (8) en un quatrième matériau synthétique (9) est prévue en plus de la couche primaire (2) et le deuxième composant de renforcement (6) se trouve à l'intérieur ou à l'extérieur de la couche secondaire (8).

4. Tuyau selon l'une quelconque des revendications précédentes, **caractérisé en ce que** le premier matériau synthétique (1) et/ou le quatrième matériau synthétique (9) présente(nt) une dureté Shore A dans la plage de 60 à 85 et **en ce que** le deuxième matériau synthétique (4) et/ou le troisième matériau synthétique (7) présente(nt) une dureté Shore A dans la plage de 90 à 100.

5. Tuyau selon l'une quelconque des revendications précédentes, **caractérisé en ce que** les lignes en diagonale formées par les composants de renforcement (3, 6) forment, avec l'axe longitudinal (5) du tuyau, un angle (A) dans la plage de 30° à 70°, de préférence de 40° à 60°, plus préférablement de 50° à 55°, de préférence de 54°.

6. Tuyau selon l'une quelconque des revendications précédentes, **caractérisé en ce que** la couche primaire (2) et/ou la couche secondaire (8) est/sont réalisée(s) de manière transparente, c'est-à-dire de manière translucide ou transparente.

7. Tuyau selon l'une quelconque des revendications précédentes, **caractérisé en ce que** le premier matériau synthétique (1) et/ou le quatrième matériau synthétique (9) comprend/comprennent du PVC, le PVC étant en plus additionné d'un plastifiant, qui présente au sein de la matrice de PVC un niveau de migration, mesuré selon la norme ASTM D 3291, de 0 à 2, valeurs extrêmes comprises, de préférence d'au plus 1.
